Europäisches Patentamt

European Patent Office

Office européen des brevets

(11) Veröffentlichungsnummer: **0 252 366 B1**

# (12) EUROPÄISCHE PATENTSCHRIFT

(45) Veröffentlichungstag der Patentschrift: **03.07.91**

(51) Int. Cl.⁵: **B27K 3/52**, B27K 3/50

(21) Anmeldenummer: **87109056.9**

(22) Anmeldetag: **24.06.87**

(54) **Kupfer- und Organozinnverbindungen enthaltende Holzschutzmittel.**

(30) Priorität: **26.06.86 DE 3621361**

(43) Veröffentlichungstag der Anmeldung:
**13.01.88 Patentblatt 88/02**

(45) Bekanntmachung des Hinweises auf die
Patenterteilung:
**03.07.91 Patentblatt 91/27**

(84) Benannte Vertragsstaaten:
**AT BE CH DE ES FR GB GR IT LI NL SE**

(56) Entgegenhaltungen:
**DE-A- 2 418 859**
**GB-A- 2 152 816**
**US-A- 2 310 257**

(73) Patentinhaber: **Dr. Wolman GmbH**
**Postfach 11 60**
**W-7573 Sinzheim(DE)**

(72) Erfinder: **Goettsche, Reimer, Dr.**
**Waldstrasse 27**
**W-7570 Baden-Baden 19(DE)**
Erfinder: **Marx, Hans-Norbert**
**Mozartweg 8**
**W-7580 Buehl-Weitenung(DE)**
Erfinder: **Borck, Hans-Volker**
**Im Kastanienwald 8**
**W-7570 Baden-Baden(DE)**

(74) Vertreter: **Mutzbauer, Helmut, Dr. et al**
**Carl-Bosch-Strasse 38**
**W-6700 Ludwigshafen(DE)**

## Beschreibung

Holzschutzmittel auf Basis anorganischer Kupferverbindungen mit Alkanolamin als Komplexbildner sind bekannt (EP 89 958, DE-A-24 18 859, US-A-2 310 257). Sie haben den Nachteil, daß die Wirksamkeit des Mittels gegenüber holzzerstörenden Basidiomyceten trotz des hohen Kupfergehaltes im Vergleich zu bekannten kupfer- und chromathaltigen Salzen mit niedrigerem Kupfergehalt schlechter ist.

Es ist bekannt,, Organozinnverbindungen, insbesondere Tributylzinnverbindungen (TBT-Verbindungen) durch Zusatz von Emulgatoren und organischen Lösungsmitteln in Wasser zwecks Bildung von Klaremulsionen zu emulgieren und zum Schutz von Holz gegen Pilze in großtechnischen Verfahren einzusetzen. Ihre Wirksamkeit gegen Moderfaule ist schwach. Es ist ferner bekannt, Mischungen aus Kupfer-8-Hydroxychinolin und Tributylzinn-naphthanat im Holzschutz zu verwenden (GB-A-2 152 816). Die Mischungen haben den Nachteil, daß Kupfer-8-Hydroxychinolin eine sehr spezielle und in großen Mengen nicht leicht zugängliche Kupferverbindung ist und andere Kupferverbindungen (z.B. Kupfercarbonat, Kupferfluorid und Kupferhydroxid) in großen Mengen und für technische Zwecke leicht zugänglich sind.

Es wurde jetzt gefunden, daß die obengenannten Nachteile nicht auftreten bei Holzschutzmitteln auf Basis von Kupferverbindungen, außer Kupfer-8-Hydroxychinolin, und Alkanolaminen, die eine Tributylzinnverbindung und einen Emulgator enthalten. Trotz der Kupferverbindung im Holzschutzmittel werden die Tributylzinnverbindungen beim Verdünnen des Holzschutzmittels mit Wasser klar im Wasser emulgiert. Durch Zugabe von organischem Lösungsmittel zum Holzschutzmittel, z.B. Alkoholen (Ethanol. Isopropanol) , Glykolen (Ethylglykol, Propylenglykol). Glykolethern (Ethylenglykolmonomethylether. Ethylenglykolmonoethylether) , Glykoletherestern (Butylglykolacetat). Dimethylformamid können beide Verbindungen bereits im Holzschutzmittel in eine homogene Lösung überführt werden. Durch Zugabe von langkettigen aliphatischen Carbonsäuren und Dicarbonsäuren ($C_6$-$C_{20}$) (z.B. 2-Ethylhexansäure, Adipinsäure, Isononansäure, Palmitinsäur, Stearinsäure) oder ihrer Kupfersalze zum Holz-schutzmittel kann gegebenenfalls auf die Verwendung der organischen Lösungsmittel verzichtet oder ihre Menge im Holzschutzmittel gering gehalten werden. Gleichzeitig wird hierdurch die Kupferfixierung im Holz nach der Imprägierung des Holzes mit den entsprechenden verdünnten Lösungen des Holzschutzmittels verbessert.

Kupferverbindungen sind beispielsweise anorganische wasserlösliche und wasserunlösliche Kupferverbindungen z.B. basisches Kupfercarbonat, Kupferfluoroborat, Kupferfluorid, Kupferborat, Kupferhydroxid.

Ein Alkanolamin ist insbesondere Monoethanolamin: die Herstellung der Holzschutzmittel ist auch mit anderen Alkanolaminen. z.B. Isopropanolamin, 1,1-, 1 ,2-Diaminoethanol, Aminoethylethanolamin, Diethanolamin, Dimethylethanolamin möglich. Hierbei wird die Menge der zugesetzten Alkanolamine vorteilhaft so bemessen, daß sich in der verdünnten wäßrigen Imprägnierlösung ein pH-Wert von 8 oder mehr, vorzugsweise 9 bis 10 einstellt. Die Menge der Alkanolamine soll zur Komplexbildung des Kupfers ausreichen (1 g-Atom Kupfer benötigt i.a. 4 mol Äquivalente Amin) und soll gegebenenfalls Alkanolamin-Salze der gegebenenfalls vorhandenen organischen Säure bilden.

Der pH-Wert der Holzschutzmittel und der verdünnten wäßrigen Imprägnierlösung kann gegebenenfalls unabhängig von dem Gehalt an Alkanolamin auch durch Zusatz von Alkalien, Ammoniak oder anderen wasserlöslichen Aminen so eingestellt werden, daß die verdünnte wäßrige Lösung des Holzschutzmittels den gewünschten pH-Wert hat.

Eine Tributylzinnverbindung (TBT-Verbindung) ist beispielsweise Tributylzinnoxid, seine Ester oder Salze z.B. TBT-versatoat, TBT-naphthenat, TBT-benzoat, TBT-N-Cyclohexyl-hydroxydiazeniumoxid.

Ein Emulgator ist beispielsweise ein anionischer, kationischer oder nichtionischer Emulgator oder eine Mischung davon, z.B. Additionsprodukte von Ethylenoxid (EO) oder Propylenoxid oder deren Mischungen an organischen Hydroxyverbindungen, beispielsweise Alkylphenole, Fettsäuren und Fettalkohole und deren Mischungen.

Die Holzschutzmittel liegen in konzentrierter Form vor z.B. als Zwei-Phasen-Mischungen, als homogene, viskose Flüssigkeiten, Pasten oder in fester Form.

Es empfiehlt sich, dem Holzschutzmittel Borsäure, Borate, Fluoride, Fluoroborate zuzusetzen, um durch diese Bestandteile durch Diffusion im Holz auch eine Imprägnierung nicht zugänglicher Holzbereiche (Kernholz) zu bewirken.

Durch Zusatz fungizider organischer Anionen oder deren Salzen, z.B. Sorbate, Benzoate oder Salze des N-Cyclohexyldiazeniumoxids oder fungizider amphoterer Verbindungen kann die Wirksamkeit gegebenenfalls verbessert oder das Wirkungsspektrum erweitert werden. Die Fixierung des Cu-Anteils kann gegebenenfalls durch Zusatz z.B. von Oxalsäure oder Thiocyanaten verbessert werden.

Die wasserverdünnbaren Holzschutzmittel enthalten - in konzentrierter Form - das Kupfer berechnet als Element, i.e. in einer Menge von 1 bis 15 Gew.%.

Geeignete Konzentrate enthalten beispielsweise (Gew.%)

2,5 bis 50 % Cu-Verbindung

10 bis 50 % Alkanolamin

0,5 bis 10 % einer Organozinnverbindung

1,0 bis 30 % eines Emulgators

bis zu 40 % Verbindung mit einem fungiziden anorganischen oder organischen Anion

bis zu 40 % organische Lösungsmittel

bis zu 40 % einer langkettigen ($C_6$-$C_{20}$)-Carbonsäure oder -Dicarbonsäure

wobei die Summe jeweils 100 (Gew.%) ergibt, sowie gegebenenfalls untergeordnete Mengen an anderen Bestandteilen, wie Aminen, Ammoniak, Korrosionsinhibitoren und erforderlichenfalls Wasser, dessen Anteil jedoch i.a. gering gehalten werden kann und im wesentlichen der Handhabung dient. Die Erfindung erstreckt sich gleichermaßen auf das Holzschutzmittel (Konzentrat) wie auch auf die durch Verdünnung mit Wasser daraus herstellbaren Imprägnierlösungen entsprechend geringer Einzelkonzentration.

Es ist überraschend, daß die neuen Holzschutzmittel trotz der Mischung aus Kupfer- und Zinnverbindungen bei der Verdünnung mit Wasser eine klare Flüssigkeit ergeben und daß auch bei hohen Konzentrationen der Kupferverbindung im konzentrierten Holzschutzmittel diese Kupferverbindung einwandfrei löslich ist.

Die folgenden Beispiele erläutern die neuen Holzschutzmittel.

Vergleich:         17 % Cu(OH)$_2$ Cu CO$_3$

(nicht erfindungs-    30 % Isononansäure oder 2-Ethylhexansäure

gemäß)            42 % Monoethanolamin

                 11 % Wasser

Das Holzschutzmittel (Konzentrat) wird im Verhältnis 1:24 (Gew.-Verhältnis) mit Wasser verdünnt (4 % Tränkkonzentration). Das trockene Holz wird mit der wäßrigen verdünten Lösung getränkt, getrocknet und mit Wasser gewaschen (Auswaschbeanspruchung).

Grenzwerte nach Auswaschbeanspruchung gegen Coniophora puteana (Kiefernsplintholz)

4 % Tränkkonzentration 24 kg/m$^3$

Die Infektion des imprägnierten Holzes mit Chaetomium erfolgt durch Eingraben in Vermiculit, der die Sporen des Pilzes enthält (Vermiculit-Eingrabeverfahren).

Grenzwerte gegen Moderfäule (Chaetomium globosum, Vermiculit-Eingrabeverfahren) in Buchenholz (nach Auswaschbeanspruchung)

4 % Tränkkonzentration 24,0 kg/m$^3$

Vergleich:         20 % Cu(OH)$_2$ Cu CO$_3$

(nicht erfindungs-    43 % Monoethanolamin

gemäß)            15 % Borsäure

                 22 % Wasser

Grenzwerte nach Auswaschbeanspruchung gegen Coniophora puteana (Kiefernsplintholz)

mehr als 4 % Tränkkonzentration mehr als 28 kg/m$^3$

Grenzwerte gegen Moderfäule (Chaetomium globosum, Vermiculit-Eingrabeverfahren) in Buchenholz (nach Auswaschbeanspruchung)

2,5 bis 4 % 15 bis 24 kg/m$^3$

```
Vergleich:              10 % TBT-Naphthenat oder TBT-Versatoat
(nicht erfindungs-      65 % ethoxiliertes Nonylphenol (10 Ethylenoxid je
gemäß)                      Nonylphenol = EO ca. 10)
                        25 % Butylglykolacetat
```

Grenzwerte nach Auswaschbeanspruchung gegen Coniophora puteana (Kiefernsplintholz)
    1,0 bis 1,6 %   7,0 bis 11,2 kg/m³
Grenzwerte gegen Moderfäule (Chaetomium globosum, Vermiculit-Eingrabeverfahren) in Buchenholz (nach Auswaschbeanspruchung)
mehr als 4 %   mehr als 24 kg/m³

### Beispiel 1 (erfindungsgemäß)

```
13.3 % Cu(OH)₂ CuCO₃
28.0 % Monoethanolamin
 4.0 % Borsäure
 6.7 % Isononansäure
 3.3 % TBT-Naphthenat
21.3 % ethoxiliertes Nonylphenol (EO ca. 10)
 8.4 % Mischung von Glykoletheracetaten
15.0 % Wasser
```

Grenzwerte nach Auswaschbeanspruchung gegen Coniophora puteana (Kiefernsplintholz)
    1,0 bis 1,6 %   7,0 bis 11,2 kg/m³
Grenzwerte gegen Moderfäule (Chaetomium globosum, Vermiculit-Eingrabeverfahren) in Buchenholz (nach Auswaschbeanspruchung)
    1,6 bis 2,5 %   9,6 bis 15,0 kg/m³

### Beispiel 2

```
13.3 % Cu(OH)₂ CuCO₃
28.0 % Monoethanolamin
 4.0 % Borsäure
 6.7 % 2-Ethylhexansäure
 3.3 % TBT-Versatoat
21.3 % ethoxiliertes Nonylphenol (EO ca. 10)
 8.4 % Mischung von Glykolacetaten
15.0 % Wasser
```

Grenzwerte nach Auswaschbeanspruchung gegen Coniophora puteana 1,0 bis 1,6 %   7,0 bis 11,2 kg/m³
Grenzwerte gegen Moderfäule (Chaetomium globosum) in Buchenholz nach Auswaschbeanspruchung
    1,6 bis 2,5 %   9,6 bis 15,0 kg/m³

<u>Beispiel 3</u>

```
10    % Cu(OH)₂CuCO₃
21    % Ethanolamin
 2,5  % TBT-versatoat
17,5  % ethoxiliertes Nonylphenol (EO ca. 10)
17,0  % Ethanol
17,0  % Porgylenglykol
15,0  % Wasser
```

Grenzwerte nach Auswaschung, Coniophora puteana
1,6 bis 2,5 %   11,2 bis 17,5 kg/m$^3$
Grenzwerte gegen Moderfäule (Chaetomium globosum) in Buchenholz nach Auswaschbeanspruchung
1,6 bis 2,5 %   9,6 bis 15,0 kg/m$^3$

**Ansprüche**

1. Holzschutzmittel auf der Grundlage einer Kupferverbindung, außer Kupfer-8-Hydroxychinolin, und eines Alkanolamins, dadurch gekennzeichnet, daß es zusätzlich eine Tributylzinnverbindung und einen Emulgator enthält und beim Verdünnen mit Wasser eine Flüssigkeit mit einem pH-Wert von 8 oder mehr als 8 ergibt.

2. Holzschutzmittel gemäß Anspruch 1, dadurch gekennzeichnet, daß es basisches Kupfercarbonat, Monoethanolamin, Tributylzinn-Naphthenat und ein ethoxyliertes Alkylphenol enthält.

3. Verfahren zum Schutz von Holz gegen Pilzbefall, dadurch gekennzeichnet, daß man das Holz mit einem Holzschutzmittel gemäß Anspruch 1 oder seiner verdünnten wäßrigen Lösung behandelt.

4. Imprägnierlösung zum Schutz von Holz gegen Pilzbefall, dadurch gekennzeichnet, daß sie ein Holzschutzmittel gemäß Anspruch 1 und zusätzlich Wasser enthält.

**Claims**

1. A wood protecting agent based on a copper compound, apart from copper 8-hydroxyquinoline, and on an alkanolamine, which agent additionally contains a tributyltin compound and an emulsifier and gives a liquid with a pH of 8 or more than 8 on dilution with water.

2. A wood protecting agent as claimed in claim 1, which contains basic copper carbonate, monoethanolamine, tributyltin naphthenate and an ethoxylated alkylphenol.

3. A process for protecting wood against fungal attack, which comprises treating the wood with a wood protecting agent as claimed in claim 1 or with a dilute aqueous solution thereof.

4. An impregnation solution for protecting wood against fungal attack, which contains a wood protecting agent as claimed in claim 1 and water in addition.

**Revendications**

1. Agent de protection du bois à base d'un composé de cuivre, sauf le cuivre-8-hydroxyquinoline et d'une alcanolamine, caractérisé par le fait qu'il contient en outre un composé tributyl-étain et un émulgateur et qu'il donne par dilution avec de l'eau un liquide d'un pH de 8 ou plus de 8.

2. Agent de protection du bois selon la revendication 1, caractérisé par le fait qu'il contient du carbonate de cuivre basique, de la méthanolamine, du naphtenate de tributyl-étain et un alkylphénol éthoxylé.

3. Procédé pour la protection du bois contre une attaque par les champignons, caractérisé par le fait qu'on traite le bois avec un agent de protection du bois selon la revendication 1 ou sa solution aqueuse diluée.

4. Solution d'impregnation pour la protection du bois contre une attaque par les champignons, caractérisée par le fait qu'elle contient un agent de protection du bois selon la revendication 1 et de l'eau additionnelle.